# EUROPÄISCHE PATENTSCHRIFT

(11) **EP 2 284 506 B1**
(45) Veröffentlichungstag und Bekanntmachung des Hinweises auf die Patenterteilung: **28.02.2018**
(21) Anmeldenummer: 10007574.6
(22) Anmeldetag: 21.07.2010
(51) Int. Cl.: G01G 23/01, G01D 9/00, G01D 3/02, G01D 3/08

(54) **Verfahren zum Betrieb eines Messgeräts**
Method for operating a measuring device
Procédé destiné au fonctionnement d'un appareil de mesure

(30) Priorität: 10.08.2009 DE 102009036863
(43) Veröffentlichungstag der Anmeldung: 16.02.2011
(73) Patentinhaber: Bizerba SE & Co. KG, 72336 Balingen (DE)
(72) Erfinder: Mössmer, Harmy, 72393 Burladingen (DE)
(74) Vertreter: Manitz Finsterwald Patentanwälte PartmbB

(56) Entgegenhaltungen:
- WO-A1-96/09523
- WO-A2-2009/010284
- "Eichfähiger Datenspeicher mit Software OMNISCALE-MANAGER - Type approved data storage device with the software OMNISCALE-MANAGER" PRÜFSCHEIN PHYSIKALISCH-TECHNISCHE BUNDESANSTALT,, Nr. D09-00.12 1. Revision, 1. Juli 2007 (2007-07-01), Seiten 1-8, XP007915479

## Beschreibung

Die vorliegende Erfindung betrifft ein Verfahren zum Betrieb eines Messgeräts, insbesondere einer Waage.

Gemäß nationalen Vorschriften müssen im geschäftlichen oder amtlichen Verkehr ermittelte Messergebnisse üblicherweise mit geeichten Messgeräten ermittelt werden. Insbesondere besteht diese Eichpflicht auch für selbsttätige und nichtselbsttätige Waagen. Die den ermittelten Messergebnissen zugeordneten eichpflichtigen Messdaten werden in einem eichfähigen Datenspeicher gespeichert. Hierbei muss sichergestellt werden, dass Manipulationen, Veränderungen oder sonstige Beeinflussungen der ermittelten Messergebnisse bei der Übertragung und Speicherung der Messergebnisse verhindert oder zumindest erkannt werden können.

Es wird derzeit darüber nachgedacht, als Datenspeicher für derartige Messgeräte Wechseldatenspeicher einzusetzen. Ein Wechseldatenspeicher besitzt den Vorteil, dass er als austauschbarer mobiler Datenträger ohne großen Aufwand auch beispielsweise an einen PC angeschlossen und dort ausgewertet werden kann, wobei bevorzugt - sofern es sich bei dem PC um eine nicht-geeichte Zusatzeinrichtung zu dem Messgerät handelt - die von dem PC ausgelesenen Daten ihren Eichstempel verlieren. Ein Wechseldatenspeicher erlaubt auch eine einfache Archivierung der Messdatensätze. Die mit einem Wechseldatenspeicher einhergehende Mobilität der Messdaten erhöht jedoch die Gefahr der Manipulation der auf dem Datenspeicher gespeicherten Daten.

Das Dokument WO 96/09523 A1 offenbart ein Verfahren der eingangs genannten Art, bei dem das Messgerät dazu ausgelegt ist, Messdatensätze auf einer EEPROM-Karte zu speichern. Das Dokument 2009/010284 A2 offenbart ein Verfahren der eingangs genannten Art, bei dem eine Waage dazu ausgelegt ist, Wägedatensätze auf einem Wechseldatenspeicher zu speichern, wobei bei einem erlaubten Lesezugriff auf den Wechseldatenspeicher eine digitale Signatur der Wägedatensätze geprüft werden kann. Das Dokument Physikalisch-Technische Bundesanstalt, Prüfschein, Ausgestellt für "Computer-Systeme-Messtechnik GmbH", Gegenstand "Eichfähiger Datenspeicher mit Software Omniscale-Manager", Prüfscheinnummer D09-00.12, 1. Revision, Braunschweig, 04.05.2007, offenbart einen eichfähigen Speicher, der über eine serielle Schnittstelle an geeichte elektromechanische Waagen zur Verwendung im eichpflichtigen Verkehr angeschlossen werden kann.

In diesen Dokumenten wird jedoch nicht offenbart, dass eine Zugehörigkeitsprüfung mittels einer auf dem Wechseldatenträger verschlüsselt gespeicherten Hardwarekennung des Messgeräts vorgenommen wird. Der Erfindung liegt die Aufgabe zugrunde, geeignete Sicherheitsmaßnahmen bereitzustellen, durch die die Datenintegrität der in einem Wechseldatenträger gespeicherten Messdatensätze zumindest weitgehend gewährleistet werden kann. Diese Aufgabe wird durch ein Verfahren nach unabhängigem Anspruch 1 gelöst. Das Verfahren zum Betrieb eines Messgeräts, insbesondere einer Waage ist dazu ausgelegt, Messdatensätze, insbesondere Wägendatensätze, auf einem Wechseldatenspeicher zu speichern, gelöst, bei dem bei an das Messgerät angeschlossenem Wechseldatenspeicher zu einem bestimmten Zeitpunkt, insbesondere bei einem Start des Messgeräts, die Zugehörigkeit des Wechseldatenspeichers zu dem Messgerät und die Integrität wenigstens eines auf dem Wechseldatenspeicher gespeicherten Messdatensatzes oder eines Teils hiervon geprüft werden. Zu dem bestimmten Zeitpunkt, insbesondere bei einem Boot-Vorgang bzw. einem Hochfahren des Messgeräts, einem Beginn der Messfunktionalität des Messgeräts bzw. einem Beginn des Messbetriebs, werden - insbesondere von dem Messgerät - also wenigstens zwei Prüfungen durchgeführt. Bei dem erfindungsgemäßen Verfahren wird geprüft, ob der an das Messgerät angeschlossene Wechseldatenspeicher auch tatsächlich zu dem Messgerät gehört. Insbesondere ist der Wechseldatenspeicher mit einer in Software ausgeführten Markierung versehen, die eine eindeutige Zuordnung des Wechseldatenspeichers zu dem Messgerät erlaubt. Bevorzugt sind das Messgerät, baugleiche Messgeräte und verwandte Messgeräte derart konfiguriert, dass Messdatensätze jeweils nur auf einen zugehörigen Wechseldatenspeicher geschrieben werden können. Umgekehrt ist es bevorzugt, wenn ein markierter Wechseldatenspeicher nur in dem jeweils zugeordneten Messgerät - und in keinem anderen Messgerät - zur Messdatenspeicherung verwendbar ist.

Darüber hinaus wird bei dem erfindungsgemäßen Verfahren anhand wenigstens eines auf dem Wechseldatenspeicher gespeicherten Messdatensatzes geprüft, ob die auf dem Wechseldatenspeicher gespeicherten Messdatensätze manipuliert wurden. Dabei kann die Integrität des gesamten Messdatensatzes oder es kann die Integrität lediglich eines Teils des Messdatensatzes überprüft werden. Beispielsweise kann die Integrität eines Headers des Messdatensatzes und/oder die Integrität eines Datenfelds des Messdatensatzes überprüft werden. Die auf dem Wechseldatenspeicher gespeicherten Messdatensätze wurden bei einem vorhergehenden Betrieb des Messgeräts erzeugt und entsprechen den Messergebnissen vorhergehender Messvorgängen.

Die Erfindung betrifft weiterhin ein Computerprogramm mit Programmcode-Mitteln, um das Verfahren, wie es vorstehend beschrieben ist, durchzuführen, wenn das Programm auf einem Computer, insbesondere des Messgerät, ausgeführt wird.

Die Erfindung betrifft ferner ein Computerprogrammprodukt mit Programmcode-Mitteln, die auf einem computerlesbaren Datenträger gespeichert sind, um das Verfahren, wie es vorstehend beschrieben ist, durchzuführen, wenn das Computerprogramm auf einem Computer, insbesondere des Messgerät, ausgeführt wird. Die Erfindung betrifft ausserdem ein Messgerät nach unabhängigem Anspruch 1, Das Messgerät, insbesondere eine Waage, ist dazu ausgelegt, Messdatensätze auf einem Wechseldatenspeicher zu speichern und bei an das Messgerät angeschlossenem Wechseldatenspeicher zu einem bestimmten Zeitpunkt, insbesondere bei einem Start des Messgeräts, die Zugehörigkeit des Wechseldatenspeichers zu dem Messgerät und die Integrität wenigstens eines auf dem Wechseldatenspeicher gespeicherten Messdatensatzes oder eines Teils hiervon zu prüfen.

Vorteilhafte Ausführungsformen der Erfindung sind in der nachfolgenden Beschreibung und den Unteransprüche angegeben, wobei die im Zusammenhang mit dem erfindungsgemäßen Verfahren angegebenen vorteilhaften Ausführungsformen auch für das erfindungsgemäße Messgerät gelten. Das zu einem früheren Zeitpunkt durchgeführte Einschreiben der Markierung in den Wechseldatenspeicher kann als Aktivierung des Wechseldatenspeichers bezeichnet werden. Die Aktivierung wird bevorzugt von dem Messgerät durchgeführt. Die Markierung kann in einer Konfigurationsdatei (z.B. CFG-Datei) auf dem Wechseldatenspeicher gespeichert werden. Bei der Aktivierung des Wechseldatenspeichers kann auch eine Kennung des Wechseldatenspeichers in dem Messgerät hinterlegt werden, d.h. der Wechseldatenspeicher kann in dem Messgerät registriert werden. Vorzugsweise ist der Wechseldatenspeicher vor der Aktivierung bereits initialisiert. Die Initialisierung bzw. Erstinitialisierung wird bevorzugt von einem PC oder aber auch von dem Messgerät durchgeführt. Zur Initialisierung des Wechseldatenspeichers kann eine Initialisierungsdatei (z.B. INI-Datei) erstellt werden, in der die Blocklänge und der Aufbau der Messdatensätze festgelegt sind. Weiterhin können in der Initialisierungsdatei Zusatzinformationen enthalten sein, die von dem zugeordneten Messgerät ggf. aber nicht ausgewertet werden. Darüber hinaus kann eine Datendatei (z.B. DAT-Datei) mit Speicherblöcken bzw. Datenfeldern erstellt werden, in denen die Messdatensätze gespeichert werden, wobei die Speicherblöcke bei der Initialisierung bevorzugt mit Platzhalterinformation (beispielsweise einem Füllbyte 0x01) beschrieben werden. Die Datendatei kann - abhängig von Anwendung und Speicherzeitraum - eine Größe von beispielsweise 1 MB bis 2 GB aufweisen. Vorzugsweise kann die Blocklänge der Messdatensätze und/oder die Datendateigröße nach der Initialisierung des Wechseldatenspeichers nicht mehr geändert werden. Insbesondere sind für die Messdatensätze fest vorgegebene Speicheradressen vorhanden.

Bei dem Wechseldatenspeicher kann es sich beispielsweise um eine Flash-Karte, insbesondere um eine SD-Karte handeln, aber auch um jeden anderen mobilen Speicher bzw. jede andere mobile Speicherkarte handeln. Bevorzugt ist der Wechseldatenspeicher bzw. die vorgenannte Datendatei als Ringspeicher ausgebildet, wobei vorzugsweise beim Abspeichern eines neuen Messdatensatzes nur auf eine der insbesondere fest vorgegebenen Speicheradressen zugegriffen wird, d.h. es wird bevorzugt keine Umorganisation eines größeren Speicherbereichs vorgenommen. Dies ist insbesondere dann von Vorteil, wenn die Anzahl der möglichen Lösch- bzw. Schreibzyklen des Wechseldatenspeichers begrenzt ist.

Insbesondere besitzt der Wechseldatenspeicher eine Verzeichnisstruktur. Um einem Fehler oder einem Verlust im Verzeichnissystem vorzubeugen, werden die Initialisierungsdatei und/oder die Datendatei bevorzugt nicht im Stammverzeichnis des Wechseldatenspeichers abgelegt, sondern in einem Unterverzeichnis. Bevorzugt erfolgt durch das Messgerät kein Zugriff auf die Verzeichnis- oder Dateistruktur des Wechseldatenspeichers. Es werden bevorzugt lediglich Dateiinhalte verändert. Somit ist selbst bei einem Stromausfall, wenn sich die ausführende Software in kritischen Abschnitten befindet, das Dateisystem nicht gefährdet.

Ein Messdatensatz kann beispielsweise wie folgt aufgebaut sein:

| | |
|---|---|
| Speicherkennung | 2 Byte |
| Eichzähler | 4 Byte |
| Datenanzahl | 4 Byte |
| CRC16 des Headers | 2 Byte |
| Eichdatenfeld | N Byte |
| CRC16 der Eichdaten | 2 Byte |
| unbenutzter Bereich | 0 ... N Byte |

Mit der Speicherkennung kann ein Flag gesetzt werden, um einen mit einem Messdatensatz beschriebenen Speicherblock von einem unbeschriebenen Speicherblock unterscheiden zu können. Der Eichzähler, bei dem es sich bevorzugt um einen fortlaufenden Zähler handelt, wird im Kopf des Messdatensatzes abgelegt, um beim Auslesen eines Messdatensatzes die Suchzeit zu optimieren. Grundsätzlich weisen die Messdatensätze bevorzugt einen fortlaufenden Zähler auf. In dem Eichdatenfeld können die eigentlichen, insbesondere eichpflichtigen Messdaten hinterlegt werden. Um die Datensicherheit zu gewährleisten, können die Kopfdaten und die Messdaten jeweils mit einer eigenen CRC16-Prüfsumme gesichert sein. Der beispielhafte Messdatensatz kann eine Blocklänge von z.B. insgesamt 512 Byte besitzen.

Ein Messdatensatz kann also bei einem jeweiligen Messvorgang ermittelte Messdaten sowie einen fortlaufenden Zähler umfassende Kopfdaten beinhalten, und bevorzugt zusätzlich eine Prüfinformation zu den Messdaten und/oder eine Prüfinformation zu den Kopfdaten.

Bei jedem Schreibzugriff eines Messgeräts auf einen zugehörigen aktivierten Wechseldatenspeicher kann ein einem jeweiligen Messergebnis zugeordneter Messdatensatz in einem der vorgenannten Speicherblöcke hinterlegt werden.

Bei der Zugehörigkeitsprüfung wird (geprüft, ob eine auf dem Wechseldatenspeicher insbesondere verschlüsselt bzw. in verschlüsselter Form gespeicherte Hardwarekennung mit der insbesondere in dem Messgerät gespeicherten Hardwarekennung des Messgeräts übereinstimmt. Hierdurch kann ein Wechseldatenspeicher einem Messgerät eineindeutig zugeordnet werden. Insbesondere entspricht die Hardwarekennung der vorgenannten Markierung. Grundsätzlich kann aber auch jede andere einem bestimmten Messgerät eindeutig zuordenbare Kennung verwendet werden. Bei der Hardwarekennung handelt es sich vorzugsweise um eine eindeutige Kennung, insbesondere Nummer. Bevorzugt ist die Hardwarekennung in einem Chip, einer integrierten Schaltung und/oder einer CPU des Messgeräts gespeichert und/oder wird bei dessen bzw. deren Herstellung vergeben. Damit die Hardwarekennung auf dem Wechseldatenspeicher nicht im Klartext lesbar ist, kann die Hardwarekennung beim Einschreiben in den Wechseldatenspeicher z.B. durch das Messgerät, insbesondere eine Software oder ein Software-Modul des Messgeräts, verschlüsselt werden, beispielsweise mittels eines Hash-Codes.

Bei der Zugehörigkeitsprüfung kann auch geprüft werden, ob eine auf dem Wechseldatenspeicher gespeicherte Prüfinformation zu der in dem Wechseldatenspeicher gespeicherten Hardwarekennung mit einer entsprechenden Prüfinformation zu der Hardwarekennung des Messgeräts, welche bevorzugt für die Zugehörigkeitsprüfung aktuell erstellt wird, übereinstimmt. Bevorzugt handelt es sich bei der Prüfinformation um eine Prüfsumme, insbesondere eine CRC-Prüfsumme, einen Hash-Code oder eine MD5-Summe, beispielsweise eine CRC16-Prüfsumme. Die Prüfsumme kann beispielsweise über die vorgenannte Konfigurationsdatei gebildet werden. Die Prüfinformation kann zusätzlich verschlüsselt werden. Vorzugsweise sind bei einer CRC-Prüfsumme das Start-Polynom und die finale XOR-Verknüpfung geheim. Wird die auf dem Wechseldatenspeicher gespeicherte Hardwarekennung geändert, um den Betrieb des Wechseldatenspeichers auf einem anderen Messgerät zu ermöglichen, kann diese Manipulation anhand der Prüfinformation erkannt werden. Darüber hinaus können durch eine Prüfinformation Hardwarefehler erkannt werden.

Bei der Zugehörigkeitsprüfung kann auch geprüft werden, ob eine in dem Wechseldatenspeicher gespeicherte Initialisierungsinformation zu dem Wechseldatenspeicher mit einer entsprechenden in dem Messgerät bei einer vorherigen Wechseldatenspeicherregistrierung gespeicherten Initialisierungsinformation übereinstimmt. Bei der Initialisierungsinformation kann es sich beispielsweise um ein Datum handeln, zu welchem die vorgenannte Initialisierung des Wechseldatenspeichers stattgefunden hat, wobei das Datum bevorzugt durch eine Uhrzeit ergänzt ist.

Bei der Integritätsprüfung wird geprüft, ob eine aktuell gebildete Prüfinformation zu dem wenigstens einen Messdatensatz oder dem Teil hiervon mit einer entsprechenden zuvor in dem Wechseldatenspeicher und/oder in dem Messgerät gespeicherten Prüfinformation zu dem wenigstens einen Messdatensatz oder dem Teil hiervon übereinstimmt. Bei der Prüfinformation kann es sich um eine Prüfinformation wie zu der vorgenannten Hardwarekennung handeln, die zusätzlich verschlüsselt sein kann. Ist noch kein Messdatensatz auf dem Wechseldatenspeicher gespeichert, kann diese Prüfung entfallen. Grundsätzlich kann eine Prüfinformation auch zu mehreren, insbesondere allen auf dem Wechseldatenträger gespeicherten Messdatensätzen gebildet werden, oder es kann jeweils eine Prüfinformation zu mehreren derartigen Messdatensätzen gebildet werden. Bevorzugt wird eine aktuelle Prüfinformation zu dem zuletzt gespeicherten Messdatensatz oder dem Teil hiervon gebildet und die Übereinstimmung mit einer zuvor gespeicherten Prüfinformation zu dem zuletzt gespeicherten Messdatensatz oder dem Teil hiervon geprüft. Wird die Integrität des zuletzt gespeicherten Messdatensatzes festgestellt, wird auch die Integrität der übrigen gespeicherten Messdatensätze angenommen. Hierfür ist es bevorzugt, wenn die Messdatensätze einen fortlaufenden Zähler aufweisen, insbesondere einen Eichzähler, und der Zählerwert des zuletzt gespeicherten Messdatensatzes in dem Messgerät gespeichert ist. Anhand des gespeicherten Zählerwerts kann der zuletzt gespeicherte Messdatensatz schnell aufgefunden werden, so dass die vorgenannte Prüfung schnell durchgeführt werden kann.

Vorzugsweise wird zusätzlich eine aktuelle Prüfinformation zu dem ältesten Messdatensatz oder dem Teil hiervon gebildet und die Übereinstimmung mit einer zuvor gespeicherten Prüfinformation zu dem ältesten Messdatensatz oder dem Teil hiervon geprüft. Wird die Integrität des zuletzt gespeicherten Messdatensatzes sowie des ältesten Messdatensatzes festgestellt, wird auch die Integrität der übrigen gespeicherten, dazwischen liegenden Messdatensätze angenommen. Der älteste Eintrag eines Messdatensatzes kann besonders einfach dann aufgefunden werden, wenn der Wechseldatenspeicher als Ringspeicher ausgebildet ist.

Gemäß einer weiteren Ausführungsform der Erfindung weisen die Messdatensätze einen fortlaufenden Zähler auf, wobei zu dem bestimmten Zeitpunkt zusätzlich die Konsistenz des fortlaufenden Zählers geprüft wird. Insbesondere wird das Vorhandensein aller Messdatensätze mit Zählerwerten bis zu dem Messdatensatz mit dem höchsten Wert des laufenden Zählers geprüft.

Besitzt der Wechseldatenspeicher eine Verzeichnisstruktur, kann zu dem bestimmten Zeitpunkt zusätzlich die Integrität der Verzeichnisstruktur geprüft werden.

Nach einer Ausbildung der Erfindung wird bei positiver Prüfung ein Schreibzugriff des Messgeräts auf den Wechseldatenspeicher freigegeben. Ein Lesezugriff kann unabhängig von dem Ergebnis der Prüfung oder ggf. ebenfalls lediglich bei positiver Prüfung möglich sein. Darüber hinaus kann der Betrieb des Messgeräts an sich oder der Messbetrieb des Messgeräts lediglich bei positiver Prüfung möglich sein.

Außerdem kann vorgesehen sein, dass beim Speichern eines Messdatensatzes durch unmittelbares Rücklesen des auf den Wechseldatenspeicher geschriebenen Messdatensatzes geprüft wird, ob der Schreibzugriff fehlerfrei erfolgt ist. Beispielsweise kann beim Speichern eines Messdatensatzes eine Prüfinformation zu den Messdaten gebildet und den Messdaten hinzugefügt werden. Danach kann ein Header zu den Messdaten gebildet werden, der beispielsweise die vorstehend erläuterten Bestandteile umfasst. Anschließend kann ein Dateizeiger positioniert und der Messdatensatz abgelegt werden. Nach dem Ablegen des Messdatensatzes wird dieser wieder ausgelesen und anhand der ausgelesenen Checksummen geprüft. Nach Abschluss einer erfolgreichen Speicherung kann das Messgerät in Form einer positiven Auftragsquittierung über den Erfolg der Speicherung unterrichtet werden. Schlägt die Speicherung fehl, kann eine Fehlerquittierung abgesetzt werden.

Sind die Messdatensätze mit einem fortlaufenden Zähler versehen und werden im Messgerät keine Zählerwerte gespeichert, d.h. wird insbesondere der Zählerwert des zuletzt gespeicherten Messdatensatzes nicht gespeichert, kann es sein, dass - insbesondere bei jedem Start des Messgeräts - nach der letzten Position des vorgenannten Datenzeiger gesucht werden muss. Diese kann anhand des fortlaufenden Zählers bestimmt werden.

Nach einer anderen Ausbildung der Erfindung wird zum Auslesen eines Messdatensatzes der Betriebsmodus des Wechseldatenspeichers von einem Schreibmodus auf einen Lesemodus umgestellt, wobei in dem Lesemodus kein Schreibzugriff auf den Wechseldatenspeicher möglich ist. Eichrechtlich kann vorgegeben sein, dass ein Zugriff auf die gespeicherten Messdatensätze jederzeit möglich sein muss. Sofern ein paralleler Lese-und Schreibbetrieb nicht realisiert ist, kann eine Softwareschreibverriegelung vorgesehen sein. Der Wechseldatenspeicher steht dann während des Lesebetriebs nicht für das Schreiben neuer Messdatensätze zur Verfügung. Eine Speicherung von Messdatensätzen kann dann nicht mehr erfolgen und wird abgewiesen.

Es kann erforderlich sein, dass auch nach und während des Auslesens der Messdatensätze der vorgenannten Dateizeiger wie vorstehend erläutert positioniert werden muss. Insbesondere können die auf dem Wechseldatenspeicher gespeicherten Messdatensätze einzeln anhand ihrer Pufferposition oder anhand ihres Eichzählerwerts bzw. ihrer Eichzählernummer ausgelesen werden. Darüber kann vorgesehen sein, dass gezielt nach einem bestimmten Eicherzählerwert bzw. Eichzählerstand gesucht werden kann.

Bevorzugt wird ein Lesezugriff von einem insbesondere eichpflichtigen Software-Modul zum Auslesen und ggf. Anzeigen der gespeicherten Messdatensätze auf den Wechseldatenspeicher nur dann freigegeben, wenn das Software-Modul eine für einen Lesezugriff zugelassene Identifikation, insbesondere einen zugelassenen Softwareschlüssel, besitzt. Über die zugelassene Identifikation kann sich das Software-Modul gegenüber dem Messgerät bzw. gegenüber einer zumindest den Lesezugriff auf den Wechseldatenspeicher steuernden Einrichtung des Messgeräts, insbesondere gegenüber einem weiteren Software-Modul, das auf dem Messgerät abläuft, als zugelassenes Software-Modul ausweisen. Grundsätzlich kann das Software-Modul auf dem Messgerät selbst oder aber auch auf einer Zusatzeinrichtung, beispielsweise einem PC, ablaufen. Hierdurch kann eine rückwirkungsfreie, eichfähige Kommunikation mit dem Wechseldatenspeicher und/oder einer Anzeige aufgebaut werden.

Beispielsweise kann ein erstes Software-Modul vorgesehen sein, das auf dem Messgerät abläuft und zumindest den Lesezugriff auf den Wechseldatenspeicher steuert, insbesondere eine dynamische Bibliothek (z.B. DLL-Datei), die die Kommunikation mit angeschlossenen Zusatzeinrichtungen zum Auslesen der Messdatensätze steuert. Außerdem kann ein zweites Software-Modul vorgesehen sein, das auf der Zusatzeinrichtung abläuft, beispielsweise eine ausführbare Datei (EXE-Datei), die zur Anzeige der Messdatensätze ausgelegt ist. Zur Sicherung der Software-Module ist es bevorzugt, wenn sich das zweite Software-Modul bei dem ersten Software-Modul autorisiert. Hierzu kann ein von dem ersten Software-Modul generierter, zufälliger Schlüssel von dem zweiten Software-Modul über einen internen Algorithmus in eine zu dem Schlüssel passende Antwort umgerechnet werden und zu dem ersten Software-Modul gesendet werden. Das erste Software-Modul kann dann die Kommunikation der Zusatzeinrichtung mit dem Messgerät, insbesondere mit dem Wechseldatenspeicher freigeben. Im Gegenzug kann das zweite Software-Modul eine von dem ersten Software-Modul gelieferte Nummer auf deren Korrektheit prüfen. Hierdurch ist gewährleistet, dass die beiden Software-Module nicht ausgetauscht werden können.

Vorzugsweise erfolgt bei einem Lesezugriff einer Zusatzeinrichtung die Kommunikation zwischen dem Messgerät und der Zusatzeinrichtung verschlüsselt, wobei bevorzugt der zugeordnete Schlüssel die Hardwarekennung des Messgeräts oder eine andere dem Messgerät eindeutig zuordenbare Kennung beinhaltet. Insbesondere ist der Schlüssel, der in einem entsprechenden Algorithmus zur Verschlüsselung der ausgelesenen Wägedatensätze verwendet wird, aus der Seriennummer bzw. Hardwarekennung des angeschlossenen Messgeräts gebildet. Dadurch kann gewährleistet werden, dass Verbindungen der Zusatzeinrichtung zu verschiedenen Messgeräten auch unterschiedlich verschlüsselt werden. Bevorzugt erfolgt der Lesezugriff der Zusatzeinrichtung, beispielsweise eines PC zum Anzeigen der Messdatensätze, auf das Messgerät über ein Software-Modul, welches auf der Zusatzeinrichtung läuft bzw. von der Zusatzeinrichtung ausgeführt wird.

Eine Datenübertragung zwischen dem Messgerät und einer Zusatzeinrichtung kann beispielsweise über Ethernet (z.B. UDP) oder über eine serielle Schnittstelle (z.B. USB) erfolgen.

Darüber hinaus kann vorgesehen sein, dass der Wechseldatenspeicher deaktiviert oder reaktiviert wird, wenn ein Eichschalter des Messgeräts geöffnet bzw. geschlossen wird. Der in der Regel verplombte Eichschalter kann beispielsweise geöffnet werden, um eine Wartung oder eine Rekalibrierung des Messgeräts vorzunehmen. Bei einer Waage wird eine Rekalibrierung insbesondere dann durchgeführt, wenn der Standort der Waage gewechselt wird und an dem neuen Standort ein anderer g-Faktor herrscht als an dem vorherigen Standort. Die Deaktivierung des Wechseldatenspeichers kann durch Setzen eines Flag bzw. einer binären Variablen oder eines Statusindikators vorgenommen werden. Beim nachfolgenden Schließen des Eichschalters wird der Wechseldatenspeicher durch Löschen des Flag wieder reaktiviert.

Vorzugsweise ist ein in der geschlossenen Stellung des Eichschalters an das Messgerät angeschlossener Wechseldatenspeicher an dem Messgerät verriegelt, insbesondere durch Blockade durch den Eichschalter. Der Wechseldatenspeicher kann daher nur dann von dem Messgerät entnommen bzw. ausgetauscht werden, wenn der Eichschalter geöffnet ist.

Bei dem Messgerät kann es sich insbesondere um eine Waage handeln, üblicherweise mit einer Wägezelle zum Ermitteln des Gewichts einer mit der Waage gewägten Ware, mit einer Eingabeeinrichtung, insbesondere einer Tastatur, über die eine der Ware zugeordnete Ordnungsnummer, z.B. eine PLU, in die Waage eingegeben werden kann, so dass durch eine Prozessoreinheit über das Gewicht der Ware auch ein Preis für die Ware berechnet werden kann, welcher dann zusammen mit dem Gewicht auf einer Anzeigeeinheit, insbesondere einem Display, angezeigt werden kann, mit einem Netzteil zur Stromversorgung der Ladenwaage und mit einem Bon- oder Etikettendrucker. Bei der Waage kann es sich beispielsweise aber auch um einen Checkweigher handeln.

Auf einem jeweiligen Bon oder Etikett können ein Zeitstempel über den jeweiligen Abdruck, ein Wägedatensatz und die vorgenannten Hardwarekennung, insbesondere in Klartext, abgedruckt sein. Hierdurch kann der dem abgedruckten Wägedatensatz zugrunde liegende, auf dem vorgenannten Wechseldatenspeicher gespeicherte Wägedatensatz identifiziert werden. Der jeweilige abgedruckte Wägedatensatz und der jeweils zugehörige gespeicherte Wägedatensatz können dann miteinander verglichen werden.

## Patentansprüche

1. Verfahren zum Betrieb eines Messgeräts, insbesondere einer Waage, das dazu ausgelegt ist, Messdatensätze auf einem Wechseldatenspeicher zu speichern, bei dem
bei an das Messgerät angeschlossenem Wechseldatenspeicher zu einem bestimmten Zeitpunkt, insbesondere bei einem Start des Messgeräts, von dem Messgerät die Zugehörigkeit des Wechseldatenspeichers zu dem Messgerät und die Integrität wenigstens eines auf dem Wechseldatenspeicher gespeicherten Messdatensatzes oder eines Teils hiervon geprüft werden,
wobei bei der Zugehörigkeitsprüfung geprüft wird, ob eine auf dem Wechseldatenspeicher verschlüsselt gespeicherte Hardwarekennung mit der in dem Messgerät gespeicherten Hardwarekennung des Messgeräts übereinstimmt, und
wobei bei der Integritätsprüfung geprüft wird, ob eine aktuell gebildete Prüfinformation zu dem wenigstens einen Messdatensatz oder dem Teil hiervon mit einer entsprechenden zuvor in dem Wechseldatenspeicher gespeicherten Prüfinformation zu dem wenigstens einen Messdatensatz oder dem Teil hiervon übereinstimmt.

2. Verfahren nach Anspruch 1,
**dadurch gekennzeichnet,**
**dass** bei der Zugehörigkeitsprüfung geprüft wird, ob eine auf dem Wechseldatenspeicher gespeicherte Prüfinformation zu der in dem Wechseldatenspeicher gespeicherten Hardwarekennung mit einer entsprechenden Prüfinformation zu der Hardwarekennung des Messgeräts übereinstimmt.

3. Verfahren nach einem der vorstehenden Ansprüche,
**dadurch gekennzeichnet,**
**dass** bei der Zugehörigkeitsprüfung geprüft wird, ob eine in dem Wechseldatenspeicher gespeicherte Initialisierungsinformation zu dem Wechseldatenspeicher mit einer entsprechenden in dem Messgerät bei einer vorherigen Wechseldatenspeicherregistrierung gespeicherten Initialisierungsinformation übereinstimmt.

4. Verfahren nach einem der vorstehenden Ansprüche,
**dadurch gekennzeichnet,**
**dass** eine aktuelle Prüfinformation zu dem zuletzt gespeicherten Messdatensatz oder dem Teil hiervon gebildet und die Übereinstimmung mit einer zuvor gespeicherten Prüfinformation zu dem zuletzt gespeicherten Messdatensatz oder dem Teil hiervon geprüft wird, wobei bevorzugt die Messdatensätze einen fortlaufenden Zähler aufweisen und der Zählerwert des zuletzt gespeicherten Messdatensatzes in dem Messgerät gespeichert ist.

5. Verfahren nach Anspruch 4,
**dadurch gekennzeichnet,**
**dass** zusätzlich eine aktuelle Prüfinformation zu dem ältesten Messdatensatz oder dem Teil hiervon gebildet und die Übereinstimmung mit einer zuvor gespeicherten Prüfinformation zu dem ältesten Messdatensatz oder dem Teil hiervon geprüft wird, wobei bevorzugt der Wechseldatenspeicher als Ringspeicher ausgebildet ist.

6. Verfahren nach einem der vorstehenden Ansprüche,
**dadurch gekennzeichnet,**
**dass** die Messdatensätze einen fortlaufenden Zähler aufweisen, wobei zu dem bestimmten Zeitpunkt zusätzlich die Konsistenz des fortlaufenden Zählers geprüft wird, und/oder
**dass** der Wechseldatenspeicher eine Verzeichnisstruktur besitzt, wobei zu dem bestimmten Zeitpunkt zusätzlich die Integrität der Verzeichnisstruktur geprüft wird.

7. Verfahren nach einem der vorstehenden Ansprüche,
**dadurch gekennzeichnet,**
**dass** bei positiver Prüfung ein Schreibzugriff des Messgeräts auf den Wechseldatenspeicher freigegeben wird.

8. Verfahren nach einem der vorstehenden Ansprüche,
**dadurch gekennzeichnet,**
**dass** beim Speichern eines Messdatensatzes durch unmittelbares Rücklesen des auf den Wechseldatenspeicher geschriebenen Messdatensatzes geprüft wird, ob der Schreibzugriff fehlerfrei erfolgt ist, und/oder
**dass** zum Auslesen eines Messdatensatzes der Betriebsmodus des Wechseldatenspeichers von einem Schreibmodus auf einen Lesemodus umgestellt wird, wobei in dem Lesemodus kein Schreibzugriff auf den Wechseldatenspeicher möglich ist.

9. Verfahren nach einem der vorstehenden Ansprüche,
**dadurch gekennzeichnet,**
**dass** ein Lesezugriff von einem Software-Modul zum Auslesen der gespeicherten Messdatensätze auf den Wechseldatenspeicher nur dann freigegeben wird, wenn das Software-Modul eine für einen Lesezugriff zugelassene Identifikation besitzt, und/oder dass bei einem Lesezugriff einer Zusatzeinrichtung die Kommunikation zwischen dem Messgerät und der Zusatzeinrichtung verschlüsselt erfolgt, wobei bevorzugt der zugeordnete Schlüssel die Hardwarekennung des Messgeräts beinhaltet.

10. Verfahren nach einem der vorstehenden Ansprüche,
**dadurch gekennzeichnet,**
**dass** der Wechseldatenspeicher deaktiviert oder reaktiviert wird, wenn ein Eichschalter des Messgeräts geöffnet bzw. geschlossen wird.

11. Computerprogramm mit Programmcode-Mitteln, um das Verfahren nach einem der vorstehenden Ansprüche durchzuführen, wenn das Programm auf einem Computer ausgeführt wird.

12. Computerprogrammprodukt mit Programmcode-Mitteln, die auf einem computerlesbaren Datenträger gespeichert sind, um das Verfahren nach einem der Ansprüche 1 bis 10 durchzuführen, wenn das Computerprogramm auf einem Computer ausgeführt wird.

13. Messgerät, insbesondere Waage, das dazu ausgelegt ist, Messdatensätze auf einem Wechseldatenspeicher zu speichern und bei an das Messgerät angeschlossenem Wechseldatenspeicher zu einem bestimmten Zeitpunkt, insbesondere bei einem Start des Messgeräts, die Zugehörigkeit des Wechseldatenspeichers zu dem Messgerät und die Integrität wenigstens eines auf dem Wechseldatenspeicher gespeicherten Messdatensatzes oder eines Teils hiervon zu prüfen, wobei bei der Zugehörigkeitsprüfung geprüft wird, ob eine auf dem Wechseldatenspeicher verschlüsselt gespeicherte Hardwarekennung mit der in dem Messgerät gespeicherten Hardwarekennung des Messgeräts übereinstimmt, und
wobei bei der Integritätsprüfung geprüft wird, ob eine aktuell gebildete Prüfinformation zu dem wenigstens einen Messdatensatz oder dem Teil hiervon mit einer entsprechenden zuvor in dem Wechseldatenspeicher gespeicherten Prüfinformation zu dem wenigstens einen Messdatensatz oder dem Teil hiervon übereinstimmt.

## Claims

1. A method of operating a measurement device, in particular a scale, which is configured to store measurement data sets on a removable data storage device, in which,
with the removable data storage device connected to the measurement device, the association of the removable data storage device with the measurement device and the integrity of at least one measurement data set or of a part thereof stored on the removable data storage device is checked by the measurement device at a specific time, in particular at a start of the measurement device, wherein a check is made on the association check whether a hardware identifier stored in encrypted form on the removable data storage device coincides with the hardware identifier of the measurement device stored in the measurement device; and wherein a check is made on the integrity check whether currently formed check information with respect to the at least one measurement data set or with respect to the part thereof coincides with corresponding check information, previously stored in the removable data storage device, with respect to the at least one measurement data set or with respect to the part thereof.

2. A method in accordance with claim 1,
**characterized in that**
a check is made on the association check whether check information stored on the removable data storage device with respect to the hardware identifier stored in the removable data storage device coincides with corresponding check information with respect to the hardware identifier of the measurement device.

3. A method in accordance with one of the preceding claims,
**characterized in that**
a check is made on the association check whether initialization information stored in the removable data storage device with respect to the removable data storage device coincides with corresponding initialization information stored in the measurement device on a previous removable data storage device registration.

4. A method in accordance with any one of the preceding claims,
**characterized in that**
current check information with respect to the last stored measurement data set or with respect to the part thereof is formed and the coincidence with previously stored check information with respect to the last stored measurement data set or with respect to the part thereof is checked, with the measurement data sets preferably having a continuous counter and the counter value of the last stored measurement data set being stored in the measurement device.

5. A method in accordance with claim 4,
**characterized in that**
current check information with respect to the oldest measurement data set or with respect to the part thereof is additionally formed and the coincidence with previously stored check information with respect to the oldest measurement data set or with respect to the part thereof is checked, with the removable data storage device preferably being configured as a circular buffer.

6. A method in accordance with any one of the preceding claims,
**characterized in that**
the measurement data sets have a continuous counter, with the consistency of the continuous counter additionally being checked at the specific time; and/or
**in that** the removable data storage device has an index structure, with the integrity of the index structure additionally being checked at the specific time.

7. A method in accordance with any one of the preceding claims,
**characterized in that**
write access of the measurement device to the removable data storage device is released on a positive check.

8. A method in accordance with any one of the preceding claims,
**characterized in that**,
on a storage of a measurement data set by a direct reading back of the measurement data set written to the removable data storage device, it is checked whether the write access took place free of error; and/or
**in that** the operating mode of the removable data storage device is switched from a writing mode to a reading mode to read a measurement data set, with no write access to the removable data storage device being possible in the reading mode.

9. A method in accordance with any one of the preceding claims,
**characterized in that**
read access by a software module to the removable data storage device for reading the stored measurement data sets is only released if the software module has an identification which is approved for read access; and/or
**in that**, on read access of an additional device, the communication between the measurement device and the additional device takes place in encrypted form, with the associated key preferably including the hardware identifier of the measurement device.

10. A method in accordance with any one of the preceding claims,
**characterized in that**
the removable data storage device is deactivated or reactivated when a calibration switch of the measurement device is opened or closed.

11. A computer program having program code means to carry out the method in accordance with any one of the preceding claims when the program is executed on a computer.

12. A computer program product having program code means which are stored on a computer readable data carrier to carry out the method in accordance with any one of the claims 1 to 10 when the computer program is executed on a computer.

13. A measurement device, in particular a scale, which is configured to store measurement data sets on a removable data storage device and, with the removable data storage device connected to the measurement device, to check the association of the removable data storage device with the measurement device and the integrity of at least one measurement data set or a part thereof stored on the removable data storage device at a specific time, in particular at a start of the measurement device, wherein a check is made on the association check whether a hardware identifier stored in encrypted form on the removable data storage device coincides with the hardware identifier of the measurement device stored in the measurement device; and
wherein a check is made on the integrity check whether currently formed check information with respect to the at least one measurement data set or with respect to the part thereof coincides with corresponding check information, previously stored in the removable data storage device, with respect to the at least one measurement data set or with respect to the part thereof.

## Revendications

1. Procédé pour faire fonctionner un appareil de mesure, en particulier une balance, qui est conçu pour mémoriser des ensembles de données de mesure dans une mémoire de données interchangeable,
dans lequel
la mémoire de données interchangeable étant branchée à l'appareil de mesure, à un instant déterminé, en particulier lors du démarrage de l'appareil de mesure, l'appareil de mesure vérifie l'appartenance de la mémoire de données interchangeable à l'appareil de mesure ainsi que l'intégrité d'au moins un ensemble de données de mesure, ou une partie de celui-ci, mémorisé dans la mémoire de données interchangeable,
lors de la vérification de l'appartenance, on vérifie si un identifiant de matériel mémorisé en étant crypté dans la mémoire de données interchangeable coïncide avec l'identifiant de matériel de l'appareil de mesure, mémorisé dans l'appareil de mesure, et
lors de la vérification d'intégrité, on vérifie si une information de vérification formée actuellement relative audit au moins un ensemble de données de mesure ou à ladite partie de celui-ci coïncide avec une information de vérification correspondante mémorisée auparavant dans la mémoire de données interchangeable et relative audit au moins un ensemble de données de mesure ou à ladite partie de celui-ci.

2. Procédé selon la revendication 1,
**caractérisé en ce que**
lors de la vérification de l'appartenance, on vérifie si une information de vérification mémorisée dans la mémoire de données interchangeable et relative à l'identifiant de matériel mémorisé dans la mémoire de données interchangeable coïncide avec une information de vérification correspondante relative à l'identifiant de matériel de l'appareil de mesure.

3. Procédé selon l'une des revendications précédentes,
**caractérisé en ce que**
lors de la vérification de l'appartenance, on vérifie si une information d'initialisation mémorisée dans la mémoire de données interchangeable et relative à la mémoire de données interchangeable coïncide avec une information d'initialisation correspondante mémorisée dans l'appareil de mesure lors d'un enregistrement préalable de la mémoire de données interchangeable.

4. Procédé selon l'une des revendications précédentes,
**caractérisé en ce que**
on forme une information de vérification actuelle relative à l'ensemble de données de mesure mémorisé en dernier ou à ladite partie de celui-ci, et on vérifie la coïncidence avec une information de vérification mémorisée auparavant et relative à l'ensemble de données de mesure mémorisé en dernier ou à ladite partie de celui-ci, et de préférence les ensembles de données de mesure présentent un compteur continu, et la valeur du compteur de l'ensemble de données de mesure mémorisé en dernier est mémorisée dans l'appareil de mesure.

5. Procédé selon la revendication 4,
**caractérisé en ce que**
en supplément, on forme une information de vérification actuelle relative à l'ensemble de données de mesure le plus ancien ou à ladite partie de celui-ci, et on vérifie la coïncidence avec une information de vérification mémorisée auparavant et relative à l'ensemble de données de mesure le plus ancien ou à ladite partie de celui-ci, et de préférence la mémoire de données interchangeable est réalisée sous forme de mémoire en anneau.

6. Procédé selon l'une des revendications précédentes,
**caractérisé en ce que**
les ensembles de données de mesure présentent un compteur continu, et à l'instant déterminé, on vérifie en supplément la consistance du compteur continu, et/ou
**en ce que** la mémoire de données interchangeable possède une structure de répertoire, et à l'instant déterminé, on vérifie en supplément l'intégrité de la structure de répertoire.

7. Procédé selon l'une des revendications précédentes,
**caractérisé en ce que**
lors d'une vérification positive, on autorise un accès en écriture de l'appareil de mesure à la mémoire de données interchangeable.

8. Procédé selon l'une des revendications précédentes,
**caractérisé en ce que**
lors de la mémorisation d'un ensemble de données de mesure, par relecture directe de l'ensemble de données de mesure écrit dans la mémoire de données interchangeable, on vérifie si l'accès en écriture s'est passé sans erreur,
et/ou
pour la lecture d'un ensemble de données de mesure, on change le mode de fonctionnement de la mémoire de données interchangeable pour passer d'un mode écriture vers un mode lecture, et dans le mode lecture aucun accès en écriture à la mémoire de données interchangeable n'est possible.

9. Procédé selon l'une des revendications précédentes,
**caractérisé en ce que**
un accès en lecture d'un module de logiciel pour lire les ensembles de données de mesure mémorisées sur la mémoire de données interchangeable n'est autorisé que lorsque le module de logiciel possède une identification admise pour un accès en lecture, et/ou
**en ce que** lors d'un accès en lecture d'un dispositif supplémentaire, la communication entre l'appareil de mesure et le dispositif supplémentaire s'effectue de façon cryptée, et de préférence la clé associée contient l'identifiant de matériel de l'appareil de mesure.

10. Procédé selon l'une des revendications précédentes,
**caractérisé en ce que**
on désactive ou réactive la mémoire de données interchangeable lorsque l'on ouvre ou on ferme un commutateur de calibrage de l'appareil de mesure.

11. Programme informatique comportant des moyens de code de programme pour mettre en oeuvre le procédé selon l'une des revendications précédentes, lorsque le programme est exécuté sur un ordinateur.

12. Produit de programme informatique comportant des moyens de code de programme mémorisés sur un support de données lisible par ordinateur, pour mettre en oeuvre le procédé selon l'une des revendications 1 à 10, lorsque le programme informatique est exécuté sur un ordinateur.

13. Appareil de mesure, en particulier balance, qui est conçu pour mémoriser des ensembles de données de mesure dans une mémoire de données interchangeable, et, la mémoire de données interchangeable étant branchée à l'appareil de mesure, à un instant déterminé, en particulier lors du démarrage de l'appareil de mesure, pour vérifier l'appartenance de la mémoire de données interchangeable à l'appareil de mesure ainsi que l'intégrité d'au moins un ensemble de données de mesure, ou une partie de celui-ci, mémorisé dans la mémoire de données interchangeable,
et lors de la vérification de l'appartenance, on vérifie si un identifiant de matériel mémorisé en étant crypté sur la mémoire de données interchangeable coïncide avec l'identifiant de matériel de l'appareil de mesure, mémorisé dans l'appareil de mesure, et
lors de la vérification de l'intégrité, on vérifie si une information de vérification formée actuellement relative audit au moins un ensemble de données de mesure ou à ladite partie de celui-ci coïncide avec une information de vérification correspondante mémorisée auparavant dans la mémoire de données interchangeable et relative audit au moins un ensemble de données de mesure ou à ladite partie de celui-ci.
